# EUROPÄISCHE PATENTSCHRIFT

(11) **EP 0 767 003 B1**
(45) Veröffentlichungstag und Bekanntmachung des Hinweises auf die Patenterteilung: **05.04.2000**
(21) Anmeldenummer: 95922806.5
(22) Anmeldetag: 13.06.1995
(51) Int. Cl.: B01J 31/16, C08F 4/42, C08F 10/02

(54) **VERFAHREN ZUR HERSTELLUNG EINES TRÄGERKATALYSATORS FÜR DIE POLYMERISATION VON ETHYLEN UND COPOLYMERISATION VON ETHYLEN MIT ALPHA-OLEFINEN**
METHOD OF PRODUCING A DEPOSITED CATALYST FOR THE POLYMERISATION OF ETHYLENE AND COPOLYMERISATION OF ETHYLENE WITH ALPHA-OLEFINS
PROCEDE DE PRODUCTION D'UN CATALYSEUR SOUS FORME DE DEPOT POUR LA POLYMERISATION D'ETHYLENE ET LA COPOLYMERISATION D'ETHYLENE AVEC DES ALPHA-OLEFINES

(30) Priorität: 20.06.1994 RU 94022210
(43) Veröffentlichungstag der Anmeldung: 09.04.1997
(73) Patentinhaber: INSTITUT KATALIZA IMENI G.K. BORESKOVA SIBIRSKOGO OTDELENIA ROSSIISKOI AKADEMII NAUK, Novosibirsk, 630090 (RU)
(72) Erfinder: ZAKHAROV, Vladimir Alexandrovich, Novosibirsk, 630090 (RU); MAKHTARULIN, Sergei Ivanovich, Novosibirsk, 630058 (RU); SERGEEV, Sergei Andreevich, Novosibirsk, 630117 (RU); MIKENAS, Tatyana Borisovna, Novosibirsk, 630028 (RU); NIKITIN, Valentin Evgenievich, Novosibirsk, 630058 (RU); ECHEVSKAYA, Ljudmila Gennadievna, Novosibirsk, 630117 (RU); KHMELINSKAYA, Angelina Dmitrievna, Novosibirsk, 630090 (RU)
(74) Vertreter: Frank, Veit Peter, Dipl.-Ing.
(86) Internationale Anmeldenummer: RU9500128
(87) Internationale Veröffentlichungsnummer: WO9535163

(56) Entgegenhaltungen:
- EP-A- 0 575 840
- DE-A- 3 409 754
- SU-A- 1 080 285
- SU-A- 1 688 788
- DATABASE WPI Section Ch, Week 8238 Derwent Publications Ltd., London, GB; Class A17, AN 82-80848E XP002028640 & SU 883 061 A (BAULIN A A) , 23.November 1981

## Beschreibung

### Gebiet der Technik

Die Erfindung bezieht sich auf Verfahren zur Herstellung von Katalysatoren für die Polymerisation von Ethylen und Kopolymerisation von Ethylen mit α-Olefinen und betrifft insbesondere Trägerkatalysatoren, die in ihrer Zusammensetzung eine Übergangsmetallverbindung auf einem magnesiumhaltigen Träger enthalten.

### Bisheriger Stand der Technik

Bekannt ist ein Verfahren zur Herstellung von Trägerkatalysatoren für die Polymerisation von Ethylen, die eine Übergangsmetallverbindung TiCl₄, VCl₄, VOCl₃) auf einem Träger der Formel MgₘClₙCₚH_{g} (m = 0.80-0.95, n = 1.60-1.90, p = 0.8-1.6, g = 1.4 - 3.4) (SU, 726702 A; SU, 1400657 A) enthalten, durch Aufbringen von Übergangsmetallverbindungen auf einen Träger. Dabei wird der Träger durch die Umsetzung von pulverförmigem Magnesiummetall mit Allychlorid in Kohlenwasserstoffen bei einem Molverhältnis RCl/Mg>2 hergestellt.

Der Hauptnachteil, der nach diesem Verfahren hergestellten Katalysatoren ist eine unkontrollierbare Körnung des Katalysatorpulvers mit einer breiten Teilchengrössenverteilung (von 1 bis 100 µm). Im Polymerisationsprozess an einem solchen Katalysator bildet sich ein Polymerpulver mit einer breiten Teilchengrössenverteilung und einer verhältnismässig geringen Schüttdichte (0.22 bis 0.30 g/cm³).

Es ist bekannt, daß eine wesentliche Verbesserung der Kennwerte des Polymerisationsprozesses sich erzielen läßt, wenn das Polymerpulver in einer engen Teilchengrössenverteilung und einer erhöhten Schüttdichte vorliegt. Hierfür werden Polymerisationskatalysatoren eingesetzt, die eine enge Teilchengrössenverteilung und eine verbesserte Morphologie besitzen. Dabei werden für verschiedene Polymerisationstechnologien und verschiedene Einsatzgebiete der Polymere Katalysatoren benötigt, die unterschiedliche mittlere Teilchengrößen, beispielsweise 10 bis 25 µm für die Suspensionspolymerisation von Ethylen und 25 bis 50 µm für die Gasphasenpolymerisation aufweisen.

Ein Katalysator mit einer engen Teilchengrößenverteilung, der Magnesiumchlorid als Träger enthält, kann durch die Umsetzung einer Lösung der Verbindung MgCl₂.3.i-C₈ H₁₇OH in einem Kohlenwasserstoff mit TiCl₄ in Gegenwart einer Elektronendonatorverbindung (Ethylbenzoat, Ethylanisat u.a.) hergestellt werden (JP-Anmeldung Nr. 59-53511). Ein nach diesem Verfahren hergestellter Katalysator zeichnet sich durch eine Teilchengröße zwischen 5 und 15 µm aus, besitzt eine hinreichend hohe Wirksamkeit (bis zu 35 kg/PE g Ti. h. atm C₂H₄) und ermöglicht die Herstellung des Polyethylenpulvers mit einer engen Granulometrie und einer hohen Schüttdichte.

Nachteilig bei einem solchen Verfahren zur Herstellung von Katalysatoren ist die Verwendung tiefer Temperaturen (bis -20°C) sowie der Einsatz großer Mengen an flüssigem TiCl₄ als Reaktionsmedium und das Freiwerden einer erheblichen Menge an Chlorwasserstoff bei der Synthese des Katalysators. Darüber hinaus gelingt es mit dem betreffenden Verfahren nicht, Katalysatoren mit einer Teilchengröße von über 15 µm zuzubereiten.

Bekannt ist ein Verfahren zur Herstellung eines Katalysators durch die Umsetzung einer Magnesium-Aluminium-Alkyl-Verbindung der Zusammensetzung RMgR'.nAlR₃.mD mit einem Chlorkohlenwasserstoff und anschließende Umsetzung des erhaltenen festen Produktes (Trägers) mit einem Titan- oder Vanadiumhalogenid (DE-Anmeldung Nr. 3626060; FR-PS Nr. 2529207). Als Organomagnesiumverbindung RMgR' kommen dabei kohlenwasserstofflösliche Verbindungen (n-Bu)Mg(i-Bu) oder (n-Bu)Mg(Oct) zum Einsatz, und als Chlorkohlenwasserstoff wird bevorzugt tert.-BuCl verwendet.

Der Hauptnachteil der nach diesem Verfahren hergestellten Katalysatoren liegt in deren ungenügend hohen Wirksamkeit.

### Offenbarung der Erfindung

Der Erfindung liegt die Aufgabe zugrunde, ein Verfahren zur Herstellung von Katalysatoren für die Polymerisation von Ethylen und Copolymerisation von Ethylen mit α-Olefinen zu entwickeln, mit denen Polymere mit einer engen und steuerbaren Teilchengrößenverteilung und einer erhöhten Schüttdichte unter Beibehaltung der hohen Wirksamkeit in Prozessen der Suspensions- und Gasphasenpolymerisation von Ethylen und Copolymerisation von Ethylen mit α-Olefinen hergestellt werden können.

Diese Aufgabe wird dadurch gelöst, daß man eine Organomagnesiumverbindung der Zusammensetzung Mg(C₆H₅)₂·nMgCl₂.mR₂O (C₆H₅ = Phenyl, n = 0.37-07, m > 2, R₂O = Ether, vorzugsweise Dibutyl- oder Diisoamylether) zur Herstellung des Trägers für diese Katalysatoren einsetzt. Die Organomagnesiumverbindung wird durch die Umsetzung von pulverförmigen Magnesium mit Chlorbenzol in Gegenwart eines Ethers, vorzugsweise Dibutyl- oder Diisoamylether, hergestellt. Der magnesiumhaltige Träger wird durch die Umsetzung einer Lösung der genannten Organomagnesiumverbindung mit Kohlenstofftetrachlorid bei Temperaturen von -20°C bis 60°C und einem Molverhältnis CCl₄/Mg ≥ 0.5 hergestellt. In dieser Verfahrensstufe bildet sich ein Pulver des magnesiumhaltigen Trägers mit der erforderlichen Körnung und einer engen Teilchengrößenverteilung als Suspension in dem verwendeten Lösungsmittel. Die Katalysatoren werden bei nachfolgender Behandlung des magnesiumhaltigen Trägers mit einer Lösung von TiCl₄, VCl₄ oder VOCl₃, in einem Kohlenwasserstoff bei einem Molverhältnis Ti(V)/Mg = 0.2 bis 1.0 und einer Temperatur von 20°C bis 100°C hergestellt.

Das wichtigste Merkmal des erfindungsgemäßen Verfahrens zur Herstellung eines Katalysators ist die Verwendung einer zusammengesetzten Organomagnesiumverbindung der Zusammensetzung Mg(C₆H₅)₂.nMgCl₂.mR₂O in der Verfahrensstufe der Zubereitung des magnesiumhaltigen Trägers, welche Organomagnesiumverbindung als Lösung in Chlorbenzol, Ether R₂O oder in Gemischen Chlorbenzol/Ether, Chlorbenzol mit aliphatischen oder aromatischen Verbindungen eingesetzt wird. Beim Chlorieren dieser Verbindung mit Tetrachlorkohlenstoff bei Temperaturen von -20°C bis 60°C und einem Molverhältnis CCl₄/Mg ≥ 0.5 bildet sich ein fester magnesiumhaltiger Träger in Form eines im Kohlenwasserstofflösemittel suspendierten Pulvers. Der nach diesem Verfahren hergestellte Träger weist eine enge Teilchengrößenverteilung im Bereich von 5 bis 50 µm auf. Die erforderliche Teilchengröße des Trägers und somit des Katalysators im angegebenen Bereich ergibt sich aus der Zusammensetzung der Organomagnesiumverbindung und den Bedingungen der Prozessführung bei der Umsetzung der Organomagnesiumverbindung mit Kohlenstofftetrachlorid. Der hergestellte magnesiumhaltige Träger weist in seiner Zusammensetzung vorzugsweise Magnesiumdichlorid (80 bis 90 Masse-%), Ether (7 bis 15 Masse-%), sowie Kohlenwasserstoffprodukte komplizierter Zusammensetzung (1 bis 5 Masse-%) auf. Der Katalysator wird durch nachfolgende Behandlung des Trägers mit einer Lösung von Titantetrachlorid (TiCl₄) oder Vanadiumchlorid (VCl₄, VOCl₃) in Kohlenwasserstoff als Lösemittel hergestellt.

Das erfindungsgemässe Verfahren ermöglicht die Herstellung von hochwirksamen Katalysatoren mit einer engen Teilchengrößenverteilung für verschiedene Anwendungsgebiete bzw. mit verschiedener mittlerer Körnung. Die vorliegende Erfindung ermöglicht beispielsweise die Herstellung von Katalysatoren mit einer Teilchengröße von 5 bis 10 µm und 10 bis 25 µm für die Suspensionspolymerisation von Ethylen und Katalysatoren mit einer Teilchengröße von 25 bis 50 µm für die Gasphasenpolymerisation von Ethylen. Bei der Polymerisation von Ethylen an diesem Katalysator bildet sich Polyethylen mit einer hohen Schüttdichte (mehr als 0.35 g/cm³) und einer engen Teilchengrößenverteilung (die Größe SPAN kleiner als 1). Beim Einsatz von Titanchlorid als aktiver Bestandteil dieser Katalysatoren weist das gebildete Polyethylen eine enge Molmasseverteilung auf, welche durch ein Schmelzindexverhältnis MI₅/MI₂ ≤ 3.1 (Beispiele 1 bis 6, Tabelle) charakterisiert wird, während beim Einsatz von Vanadiumchloriden Polyethylen mit einer breiten Molmasseverteilung gebildet wird (das Schmelzindexverhältnis MI₅ /MI₂ > 4, Beispiele 8, 9, Tabelle).∗ Die Wirksamkeit der hergestellten Katalysatoren erreicht die Werte von 140 kg Polyethylen (PE)/g Ti.h.atm C₂H₄ bzw. 20 kg PE/g V.h. atm C₂ H_{4.}
* MI = melt index (Schmelzindex).

Die Katalysatoren werden zur Polymerisation von Ethylen oder Copolymerisation von Ethylen mit α-Olefinen in Verbindung mit dem Cokatalysator Aluminiumtrialkyl (vorzugsweise Triisobutylaluminium oder Triethylaluminium) verwendet. Die Polymerisation erfolgt als Suspensionspolymerisation bei Temperaturen von 50°C bis 100°C in Kohlenwasserstoff als Lösungsmittel (z.B. Hexan, Heptan) oder als Gasphasenpolymerisation ohne Kohlenwasserstoffverdünner bei Temperaturen von 60 bis 100°C und Drücken von 2 bis 40 atm.. Als Regler der Polymermolmasse wird Wasserstoff in einer Menge von 5 bis 50 Vol.-% verwendet. Bei der Copolymerisation von Ethylen mit α-Olefinen kommen Propylen, Buten-1, Hexen-1, 4-Methylpenten-1 und weitere höhere α-Olefine zum Einsatz.

Das Wesen der Erfindung wird an Hand folgender Beispiele veranschaulicht.

### Beispiel 1.

### A. Zubereiten der Lösung der Organomagnesiumverbindung,

In einem Glasreaktor von 1 Liter Fassungsvermögen, ausgestattet mit einem Rührer und einer Thermostateinrichtung, wird die Umsetzung von 29,2 g pulverförmigen Magnesiums (1.2 mol) mit 450 ml Chlorbenzol (4.4 mol) in Gegenwart von 203 ml Dibutylether (1.2 mol) und eines Aktivierungsmittels, das eine Lösung von 0.05 g Jod in 3 ml Butylchlorid darstellt, durchgeführt. Die Umsetzung erfolgt in einer Inertgasatmosphäre (Stickstoff, Argon) bei einer Temperatur von 80°C bis 100°C während 10 Stunden. Nach Abschluß der Reaktion wird das erhaltene Reaktionsgemisch abstehen gelassen und die flüssige Phase vom Niederschlag abgetrennt. Die flüssige Phase stellt eine Lösung der Organomagnesiumverbindung in Chlorbenzol der Zusammensetzung MgPh₂.0.49MgCl₂.2(C₄ H₉)₂O mit der Konzentration 1.1 mol Mg dar.

### B. Trägersynthese.

100 ml der erhaltenen Lösung (0.11 mol Mg) werden in einem Glasreaktor mit Rührer vorgelegt und eine Lösung von 21.2 ml CCl₄ in 42 ml Heptan (0.22 mol CCl₄) bei 20°C eine Stunde lang dem Reaktor zudosiert. Das Reaktionsgemisch wird bei dieser Temperatur und unter Rühren 60 Minuten lang gehalten, dann wird die Mutterlauge entfernt und der entstandene Niederschlag viermal mit je 100 ml Heptan bei 60°C gewaschen. Man erhält 11.8 g des pulverförmigen Organomagnesiumträgers als Suspension in Heptan.

### C. Zubereiten des Katalysators.

Der erhaltenen Suspension des magnesiumhaltigen Trägers in Heptan werden 12.1 ml TiCl₄ (TiCl₄ /Mg = 1) zugegossen, das Reaktionsgemisch wird auf 60 C erwärmt und während 2 Stunden unter Rühren gehalten, dann wird abstehen gelassen und der feste Niederschlag viermal mit je 100 ml Heptan bei 60°C gewaschen. Man erhält den Trägerkatalysator mit einem Ti-Gehalt von 2.3 Masse-%. Die mittlere Teilchengröße beträgt 13 µm.

Die Polymerisation von Ethylen wird in einem Stahlreaktor von 0.7 l Fassungvermögen, ausgestattet mit einem Rührer und einer Thermostateinrichtung, durchgeführt. Als Lösungsmittel für die Polymerisation werden n-Hexan (250 ml) und der Cokatalysator Al(i-Bu)₃ mit der Konzentration 5 mmol/l eingesetzt. Die Polymerisation erfolgt bei 80°C, Ethylendruck von 3.5 atm, Wasserstoffdruck von 1 atm während einer Stunde. Die Ergebnisse der Polymerisation von Ethylen sind in der Tabelle wiedergegeben.

Für das Experiment werden 0.009 g des Katalysators eingesetzt, es werden 39 g des Polymers erhalten, die Katalysatoraktivität liegt bei 4.3 kg PE/g Katalysator.h oder 187 kg/g Ti.h. Der Schmelzindex von PE (MI₅) bei der Belastung von 5 kg und der Temperatur von 190°C beträgt 6.7 g/10 min, das Schmelzindexverhältnis bei den Belastungen von 5 kg und 2.16 kg beträgt 3.1. Die Schüttdichte des PE-Pulvers ist 0,37 g/cm³ und die mittlere Teilchengröße beträgt nach Auswertung der Siebanalyse den Wert von 280 µm. Das PE-Pulver weist eine enge Teilchengrößenverteilung auf, die durch die SPAN-Größe charakterisiert wird, welche sich aus den Angaben der Siebanalyse errechnen läßt, und zwar SPAN = (d₉₀ - d₁₀)/d₅₀ worin d₉₀, d₁₀ und d₅₀ die PE-Teilchengrößen bedeuten, die dem Integralgehalt der Teilchen in einer beziehungsweise 90, 50 und 10 Masse-%igen Menge entsprechen. Die SPAN-Grösse liegt für dieses Beispiel bei 0.75.

### Beispiel 2.

Die Lösung der Organomagnesiumverbindung wird analog dem Beispiel 1 zubereitet, mit der Ausnahme, daß Diisoamylether an Stelle von Dibutylether eingesetzt wird und die Reaktion bei einer Temperatur von 80°C bis 130°C erfolgt. Es wird eine Lösung der Organomagnesiumverbindung der Zusammensetzung MgPh₂.0.37MgCl₂.2DIAE mit der Konzentration von 0.93 mol Mg/l erhalten.

Die Träger- und Katalysatorsynthesen erfolgen analog dem Beispiel 1. Man erhält im Ergebnis einen Katalysator mit dem Ti-Gehalt von 3 Masse-%. und einer mittleren Teilchengröße von 13.6 µm. Die katalytischen Eigenschaften sind in der Tabelle wiedergeben.

### Beispiel 3.

Die Lösung der Organomagnesiumverbindung wird analog dem Beispiel 1 zubereitet, mit dem Unterschied, daß 122 ml Chlorbenzol (1.2 mol) und 450 ml Dibutylether (2.7 mol) eingesetzt werden. Man erhält eine Lösung der Organomagnesiumverbindung in Dibutylether der Zusammensetzung MgPh₂.0.7MgCl₂.nDBE (mit n > 2) mit der Konzentration von 1,2 mol Mg/l.

Die Trägersynthese wird wie folgt durchgeführt. Zu 100 ml der Lösung der Organomagnesiumverbindung (0.12 mol) wird eine Lösung von Tetrachlorkohlenstoff in Dibutylether (14 ml CCl₄, in 28 ml DBE) bei 30°C während 1.5 Stunden zudosiert. Die anschließende Wärmebehandlung bei 85°C und die Wäschen erfolgen wie in Beispiel 1.

Der Katalysator wird analog dem Beispiel 1 hergestellt, doch das Molverhältnis TiCl₄/Mg betrug 0.5. Man erhält im Ergebnis einen Katalysator mit einem Ti-Gehalt von 1.65 Masse-% und einer mittleren Teilchengröße von 14 µm. Die katalytischen Eigenschaften sind in der Tabelle wiedergegeben.

### Beispiel 4.

Die Synthese der Lösung der Organomagnesiumverbindung wird analog dem Beispiel 1 durchgeführt. Die Trägersynthese erfolgt, indem man zu 100 ml der Lösung der Organomagnesiumverbindung bei -10°C während 1.5 Stunden eine Lösung von Tetrachlorkohlenstoff in Chlorbenzol (14 ml CCl₄ in 14 ml Chlorbenzol) dosiert. Die nachfolgenden Arbeitsgänge der Katalysatorsynthese erfolgen wie in Beispiel 1. Man erhält einen Katalysator mit einem Ti-Gehalt von 2.5 Masse-% und einer mittleren Teilchengröße von 6 µm. Die katalytischen Eigenschaften sind in der Tabelle wiedergegeben.

### Beispiel 5.

Die Lösung der Organomagnesiumverbindung wird analog dem Beispiel 1 zubereitet, mit dem Unterschied, daß an Stelle von Chlorbenzol ein Chlorbenzol/Toluol-Gemisch (250 ml Chlorbenzol und 250 ml Toluol) verwendet wird. Man erhält eine Lösung der Organomagnesiumverbindung der Zusammensetzung MgPh₂.0.6MgCl₂.2DBE mit der Konzentration von 0.85 mol Mg/l.

Die Trägersynthese erfolgt analog dem Beispiel 1, ausgenommen, daß eine Lösung von CCl₄ in Toluol eingesetzt wird. Der Katalysator wird analog dem Beispiel 1 zubereitet. Man erhält im Ergebnis einen Katalysator mit einem Ti-Gehalt von 5.3 Masse-% und einer mittleren Teilchengröße von 10 µm. Die katalytischen Eigenschaften sind in der Tabelle wiedergegeben.

### Beispiel 6.

Die Synthese der Lösung der Organomagnesiumverbindung wird analog dem Beispiel 1 durchgeführt.

Zu 100 ml der Lösung der Organomagnesiumverbindung mit der Konzentration von 1.1 mol Mg/l wird eine Lösung von CCl₄ in DBE (14 ml CCl₄ in 28 ml DBE) bei 36°C unter Rühren während 40 min dosiert. Nach Abschluß des Dosierens wird die Temperatur auf 80°C angehoben und das Reaktionsgemisch bei dieser Temperatur unter Rühren eine Stunde lang gehalten, dann wird die Mutterlauge entfernt und der Träger dreimal mit je 150 ml n-Hexan bei 50°-60°C gewaschen.

Der erhaltenen Suspension des Trägers in n-Hexan werden 13 ml TiCl₄ (TiCl₄/Mg = 1) bei 20°C zugegossen, das Reaktionsgemisch auf60°C erhitzt und unter Rühren 1.5 Stunden lang gehalten. Der Katalysator wird bei dieser Temperatur sechsmal mit je 150 ml n-Hexan gewaschen. Man erhält einen Katalysator, der 2.0 Masse-% Titan enthält, mit der mittleren Teilchengröße von 18.8 µm. Die katalytischen Eigenschaften werden in der Tabelle wiedergegeben.

### Beispiel 7.

Die Synthese der Lösung der Organomagnesiumverbindung wird analog dem Beispiel 2 durchgeführt.

Die Trägersynthese erfolgt analog dem Beispiel 6, mit der Ausnahme, daß die Umsetzung der Organomagnesiumverbindung mit CCl₄ bei 50°C durchgeführt wird und das Molverhältnis CCl₄/Mg bei 3 liegt.

Die Katalysatorsynthese erfolgt analog dem Beispiel 6. Der erhaltene Katalysator enthält 1.7 Masse-% Titan und weist eine mittlere Teilchengröße von 38 µm auf. Die katalytischen Eigenschaften sind in der Tabelle wiedergegeben,

### Beispiel 8.

Die Synthese der Lösung der Organomagnesiumverbindung wird analog dem Beispiel 1 durchgeführt.

Die Trägersynthese erfolgt analog dem Beispiel 6, mit der Ausnahme, daß die Umsetzung der Organomagnesiumverbindung mit CCl₄ bei 38°C durchgeführt wird. Der erhaltene Träger wird mit der Lösung bei 40°C während 2 Stunden behandelt und dann viermal mit je 100 ml n-Hexan gewaschen.

Die Katalysatorsynthese erfolgt durch die Behandlung des Trägers bei 40°C während einer Stunde mit einer Lösung von VOCl₃ in CCl₄ (2 ml der Lösung mit der Konzentration von 1.6 mmol VOCl₃/ml).

Der Katalysator wird zweimal mit je 70 ml n-Hexan gewaschen. Der erhaltene Katalysator enthält 2.3 Masse-% Vanadium und weist eine mittlere Teilchengröße von 20 µm auf. Die katalytischen Eigenschaften sind in der Tabelle wiedergegeben.

### Beispiel 9.

Die Synthese der Lösung der Organomagnesiumverbindung wird analog dem Beispiel 2 durchgeführt.

Die Trägersynthese erfolgt analog dem Beispiel 8, mit dem Unterschied, daß die Umsetzung der Organomagnesiumverbindung mit CCl₄ bei 50°C durchgeführt wird. Die nachfolgenden Arbeitsgänge der Träger- und Katalysatorsynthese werden analog dem Beispiel 8 durchgeführt, mit dem Unterschied, daß Vanadiumtetrachlorid an Stelle von Vanadiumoxytrichlorid eingesetzt wird. Man erhält einen Katalysator mit einem Vanadiumgehalt von 2.1 Masse-% und einer mittleren Teilchengröße von 37 µm. Die katalytischen Eigenschaften sind in der Tabelle wiedergegeben.

### Beispiel 10.

Der in Beispiel 4 zubereitete Katalysator wird zur Herstellung von EP-Pulver einer überhohen Molmasse verwendet. Die Polymerisation erfolgt bei 70°C in einem n-Hexan/Cokatalysator Al(i-Bu)₃-Medium (n-Hexan 300 ml, Cokatalysator 5 mmol/l) bei einem Ethylendruck in Höhe von 3 atm innerhalb von 2 Stunden. Man verwendet 0.007 g Katalysator und erhält 84 g Polyethylen. Die Ausbeute an PE beträgt 12 kg PE/g Katalysator oder 480 kg/g Ti. Die Schüttdichte des Polyethylenpulvers beträgt 0.38 g/cm³, die mittlere PE-Teilchengröße liegt bei 150 µm und die SPAN-Grösse liegt bei 0.68. Das Polyethylen weist ein Viskositätsmittel der Molmasse von 1,8·10⁶ auf.

### Beispiel 11.

Der in Beispiel 6 hergestellte Katalysator wird zur Copolymerisation von Ethylen mit Hexen-1 eingesetzt. Die Copolymerisation wird bei 70°C in einem n-Hexan/Cokatalysator Al(i-Bu)₃-Medium (n-Hexan 250 ml, Cokatalysator 5 mmol/l) bei einem Ethylendruck von 0.25 atm und einem Wasserstoffdruck von 0,25 atm durchgeführt. In den Reaktor werden 10 ml Hexen-1 vorgelegt; das Molverhältnis Hexen-1/Ethylen = 2.4. Benutzt werden 0,006 g des Katalysators, die Reaktion wird während 30 min durchgeführt, man erhält 12 g Copolymerisat.

Die Katalysatoraktivität beträgt 4.0 kg/g Katalysator.h oder 200 kg/g Ti.h. Das Copolymerisat weist einen Schmelzindex von MI₅ = 0.8 g/10 min auf und enthält 4.5 Masse-% Hexen-1.

### Beispiel 12.

Der in Beispiel 8 hergestellte Katalysator wird zur Copolymerisation von Ethylen mit Hexen-1 eingesetzt. Die Copolymerisation wird unter den Bedingungen des Beispiels 11 mit folgenden Änderungen durchgeführt: Ethylendruck 4 atm; in den Reaktor werden 5 ml Hexen-1 vorgelegt; Molverhältnis Hexen-1/Ethylen = 0.6. Für das Experiment werden 0.01 g Katalysator eingesetzt; die Reaktion dauert 30 min, man erhält 13 g Copolymerisat.

Die Katalysatoraktivität beträgt 2.6 kg/g Katalysator.h oder 116 kg/g V.h. Das Copolymerisat weist einen Schmelzindex MI₅ = 7.0 g/10 min und enthält 3.5 Masse-% Hexen-1.

### Gewerbliche Anwendbarkeit

Das erfindungsgemäße Verfahren zur Herstellung von Trägerkatalysatoren für die Polymerisation von Ethylen und Copolymerisation von Ethylen mit α-Olefinen wird auf dem Gebiet der Katalysatorzubereitung Verwendung finden, und die nach dem erfindungsgemäßen Verfahren hergestellten Katalysatoren können in der Lösungs-, Suspensions- und Gasphasenpolymerisation von Ethylen eingesetzt werden.

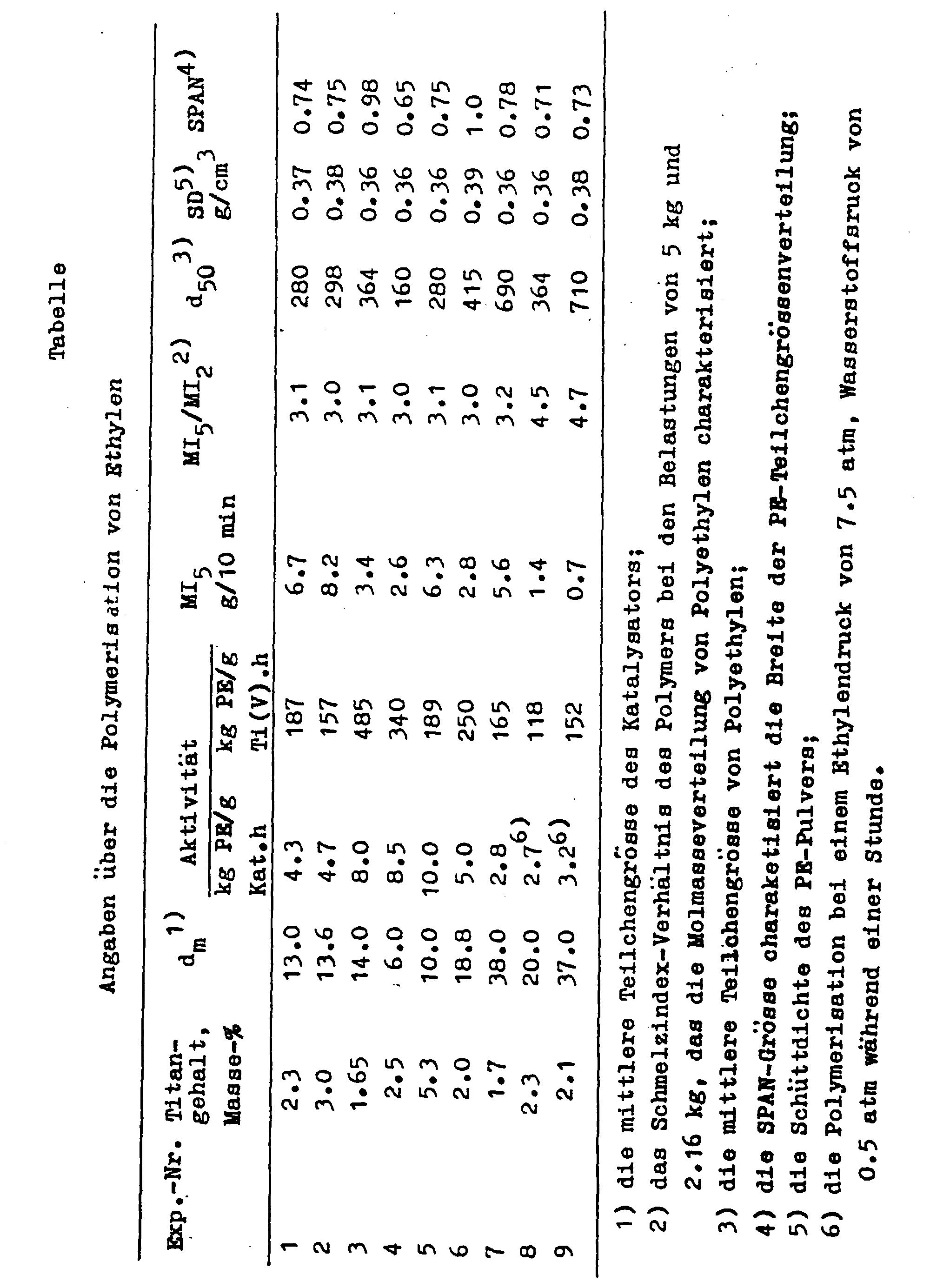

## Patentansprüche

1. Verfahren zur Herstellung eines Trägerkatalysators für die Polymerisation von Ethylen und Copolymerisation von Etylen mit
α-Olefinen, bei dem man eine Lösung einer Organomagnesiumverbindung mit einem organischen Halogenid umsetzt und den erhaltenen Träger mit Titan- oder Vanadiumverbindungen nachbehandelt,
dadurch gekennzeichnet, daß man als Organomagnesiumverbindung ein Produkt der Zusammensetzung MgPh₂.nMgCl₂.mR₂O (worin n = 0.37 - 0.7; m > 2; R₂O für Ether und Ph für Phenyl steht) einsetzt, das mit dem organischen Halogenid bei einem Molverhältnis organisches Halogenid/Magnesium von ≥ 0.5 und Temperaturen von -20°C bis 60°C umgesetzt wird.

2. Verfahren nach Anspruch 1,
dadurch gekennzeichnet, daß man die Organomagnesiumverbindung durch die Umsetzung von Magnesiummetall mit Chlorbenzol in Gegenwart von Dibutyl- oder Diisoamylether herstellt.

3. Verfahren nach Anspruch 1 oder 2
dadurch gekennzeichnet, daß man Tetrachlorkohlenstoff als organisches Halogenid einsetzt.

## Claims

1. Process for producing a supported catalyst for the polymerisation of ethylene and copolymerisation of ethylene with α-olefins, in which a solution of an organomagnesium compound is reacted with an organic halide and the resulting support is after-treated using titanium or vanadium compounds, characterised in that a product of composition MgPh₃.nMgCl₂.mR₂O (wherein n = 0.37 - 0.7; m > 2; R₂O represents ether and Ph represents phenyl) is used as organomagnesium compound, and is reacted with the organic halide in a molar ratio organic halide/magnesium of ≥ 0.5 and temperatures of-20°C to 60°C.

2. Process according to claim 1, characterised in that the organomagnesium compound is produced by reacting magnesium metal with chlorobenzene in the presence of dibutyl ether or diisoamyl ether.

3. Process according to claim 1 or 2, characterised in that carbon tetrachloride is used as organic halide.

## Revendications

1. Procédé de production d'un catalyseur sous forme de dépôt pour la polymérisation de l'éthylène et la copolymérisation de l'éthylène avec des α-oléfines, dans lequel on convertit une solution d'un composé organomagnésien avec un halogénure organique et on retraite le support obtenu avec des composés titane ou vanadium, caractérisé en ce qu'on utilise comme composé organomagnésien un produit de la composition MgPh₂.nMgCl₂.mR₂O (dans laquelle n = 0,37 - 0,7; m > 2; R₂O étant l'éther et Ph le phényl), qui est converti avec l'halogénure organique avec un rapport molaire entre l'halogénure organique / le magnésium ≥ 0, 5 et à des températures de -20°C à 60°C.

2. Procédé selon la revendication 1, caractérisé en ce qu'on prépare le composé organomagnésien par la conversion du magnésium métallique avec du chlorobenzène, en présence de dibutyl- ou diisoamyl-éther.

3. Procédé selon la revendication 1 ou 2, caractérisé en ce qu'on utilise le tétrachlorure de carbone comme halogénure organique.
